# EUROPEAN PATENT APPLICATION

(11) **EP 4 813 498 A1**
(43) Date of publication of application: **30.09.2026**
(21) Application number: 24903722.7
(22) Date of filing: 11.12.2024
(51) Int. Cl.: B01D 53/04, B01D 53/047, F28F 9/02

(54) **ADSORPTION UNIT, ADSORPTION DEVICE, AND CARBON DIOXIDE RECOVERY SYSTEM**

(30) Priority: 15.12.2023 JP 2023212468
(71) Applicant: DAIKIN INDUSTRIES, LTD., Osaka-shi, Osaka 530-0001 (JP)
(72) Inventor: ASAKURA, Hiroshi, Osaka-shi, Osaka 530-0001 (JP); MATSUMURA, Naoki, Osaka-shi, Osaka 530-0001 (JP); KIKUCHI, Yoshimasa, Osaka-shi, Osaka 530-0001 (JP)
(74) Representative: Hoffmann Eitle
(86) International application number: PCT/JP2024/043850
(87) International publication number: WO 2025/127069

(57) **Abstract**

An adsorption unit (40) includes a heat exchanger (41) that includes a plurality of heat transfer tubes (44) through which a heat medium flows and is disposed in an air flow path (AP) through which air flows, and an adsorption member (50) that includes an adsorbent (60) that adsorbs carbon dioxide in the air. The adsorption member (50) includes a plurality of adsorption portions (51) each of which is disposed between adjacent ones of the heat transfer tubes (44). Each of the plurality of adsorption portions (51) has a plurality of holes (56) through which air passes and carries the adsorbent (60).

## Description

### Technical Field

The present disclosure relates to an adsorption unit, an adsorption device, and a carbon dioxide recovery system.

### Background Art

A system for recovering carbon dioxide in the air is known. The carbon dioxide recovery system described in Patent Literature 1 includes an adsorption plate carrying an adsorbent and a circulation pipe that heats the adsorption plate. Carbon dioxide in the air is adsorbed by the adsorbent. A heating medium flowing through the circulation pipe heats and regenerates the adsorbent on the adsorption plate. Carbon dioxide desorbed from the adsorbent is transported by a pump and is stored.

### Citation List

### Patent Literature

PTL 1: Japanese Unexamined Patent Application Publication No. 2023-13169

### Summary of Invention

### Technical Problem

If carbon dioxide adsorption capability and regenerative capability of an adsorption unit having an adsorbent can be increased, carbon dioxide recovery efficiency can be improved.

An object of the present disclosure is to improve carbon dioxide recovery efficiency.

### Solution to Problem

A first aspect relates to an adsorption unit. An adsorption unit (40) includes a heat exchanger (41) that includes a plurality of heat transfer tubes (44) through which a heat medium flows and is disposed in an air flow path (AP) through which air flows; and an adsorption member (50) that includes an adsorbent (60) that adsorbs carbon dioxide in the air. The adsorption member (50) includes a plurality of adsorption portions (51) each of which is disposed between adjacent ones of the heat transfer tubes (44). Each of the plurality of adsorption portions (51) has a plurality of holes (56) through which air passes and carries the adsorbent (60).

According to the first aspect, the air in the air flow path (AP) passes through the plurality of holes (56) of the adsorption portions (51), and thus carbon dioxide in the air can be efficiently adsorbed by the adsorbent (60) of the adsorption portions (51). Each of the adsorption portions (51) is disposed between adjacent ones of the heat transfer tubes (44). Heat of the heat medium flowing through the heat transfer tubes (44) easily transfers to the adsorption portions (51). As a result, the adsorption portions (51) can be efficiently regenerated.

In the first aspect, a second aspect is arranged such that a gap is provided between each of the heat transfer tubes (44) and a corresponding one of the adsorption portions (51).

According to the second aspect, it is easy to perform work of inserting each of the adsorption portions (51) between adjacent ones of the heat transfer tubes (44) and work of extracting each of the adsorption portions (51) from between adjacent ones of the heat transfer tubes (44).

In the first or second aspect, a third aspect is arranged such that the heat transfer tubes are flat tubes (44).

According to the third aspect, each of the adsorption portions (51) is disposed between adjacent ones of the flat tubes (44). Therefore, heat of the heat medium easily transfers to the adsorption portions (51).

In the third aspect, a fourth aspect is arranged such that each of the flat tubes (44) includes a tube-side flat portion (P1) that faces a corresponding one of the adsorption portions (51). Each of the adsorption portions (51) includes an adsorption-side flat portion (P2) that faces the tube-side flat portion (P1).

According to the fourth aspect, the tube-side flat portion (P1) and the adsorption-side flat portion (P2) face each other, and therefore heat of the heat medium easily transfers to the adsorption portions (51).

In any one of the first to fourth aspects, a fifth aspect is arranged such that each of the adsorption portions (51) has, as the holes, a plurality of through-holes (56) that extend in a predetermined direction.

According to the fifth aspect, air flows through the through-holes (56), and thus carbon dioxide in the air is adsorbed by the adsorbent (60).

In the fifth aspect, a sixth aspect is arranged such that the plurality of through-holes (56) extend in a direction crossing a first direction that is a direction in which the plurality of heat transfer tubes (44) are arranged.

According to the sixth aspect, the plurality of through-holes (56) do not interfere with the heat transfer tubes (44), and therefore pressure loss of the through-holes (56) can be reduced.

In the sixth aspect, a seventh aspect is arranged such that the plurality of through-holes (56) extend in a direction crossing the first direction and a second direction that is a tube axial direction of the heat transfer tubes (44).

According to the seventh aspect, the through-holes (56) extend in a direction crossing the first direction and the second direction, and therefore pressure loss during passage of air through the adsorption unit can be reduced.

In any one of the first to seventh aspects, an eighth aspect is arranged such that the heat exchanger (41) includes header collection tubes (42, 43) to which end portions of the plurality of heat transfer tubes (44) are connected.

According to the eighth aspect, the heat medium in the plurality of heat transfer tubes (44) can be merged in the header collection tubes (42, 43), and the heat medium in the header collection tubes (42, 43) can be distributed into the plurality of heat transfer tubes (44).

In any one of the first to eighth aspects, a ninth aspect is arranged such that the adsorption member (50) includes a coupling portion (55) that couples the plurality of adsorption portions (51).

According to the ninth aspect, the plurality of adsorption portions (51) can be handled integrally, and it is therefore possible to easily perform work related to attachment, detachment, or replacement of the adsorption member (50).

In the ninth aspect, a tenth aspect is arranged such that the adsorption member (50) includes a plurality of grooves (58) each of which is provided between adjacent ones of the adsorption portions (51), and each of the plurality of heat transfer tubes (44) is fitted into a corresponding one of the plurality of grooves (58).

According to the tenth aspect, each of the heat transfer tubes (44) is fitted into a corresponding one of the grooves (58) of the adsorption member (50), and it is therefore possible to easily perform work related to attachment, detachment, or replacement of the adsorption member (50).

In the tenth aspect, an eleventh aspect is arranged such that the plurality of grooves (58) are provided in a lower portion of the adsorption member (50). The heat exchanger (41) supports the adsorption member (50) from below.

According to the eleventh aspect, the heat exchanger (41) functions as a support for the adsorption member (50).

In any one of the first to eleventh aspects, a twelfth aspect is arranged such that the adsorption portions (51) include a base member (B) that carries the adsorbent (60). The base member (B) is made of a material having a thermal conductivity of 1 [W/(m·K)] or higher.

According to the twelfth aspect, heat of the heat transfer tubes (44) easily transfers to the adsorbent (60) through the base member (B). As a result, regeneration capability of the adsorption member (50) can be increased.

In the first aspect, a thirteenth aspect is arranged such that the heat transfer tubes are flat tubes (44). A direction in which the flat tubes (44) are arranged is defined as a first direction, a direction in which the flat tubes (44) extend is defined as a second direction, and a direction orthogonal to the first direction and the second direction is defined as a third direction. The adsorption member (50) includes a coupling portion (55) that couples the plurality of adsorption portions (51). Each of the plurality of adsorption portions (51) extends in the third direction from one end side where the coupling portion (55) is located toward the other end side.

According to the thirteenth aspect, the adsorption member (50) can be attached to the heat exchanger (41) by inserting each of the plurality of adsorption portions (51) between adjacent ones of the adsorption portions (51). The adsorption member (50) can be detached from the heat exchanger (41) by extracting each of the plurality of adsorption portions (51) from between adjacent ones of the adsorption portions (51).

In the thirteenth aspect, a fourteenth aspect is arranged such that each of the adsorption portions (51) includes enlarging surfaces (81, 82) that increase an interval between adjacent ones of the adsorption portions (51) in the first direction from one end side to the other end side in the third direction.

According to the fourteenth aspect, the presence of the enlarging surfaces (81, 82) of each of the adsorption portions (51) increases an interval between adjacent ones of the adsorption portions (51) in the first direction. This makes it easy to insert each of the adsorption portions (51) between adjacent ones of the flat tubes (44). It is easy to extract each of the adsorption portions (51) from between adjacent ones of the flat tubes (44).

A fifteenth aspect is an adsorption device including the adsorption unit (40) according to any one of the first to fourteenth aspects; and a casing (31) that forms the air flow path (AP).

In the fifteenth aspect, a sixteenth aspect is arranged such that the casing (31) has an inflow port (34) through which air flows into the air flow path (AP) and an outflow port (35) through which the air in the air flow path (AP) flows out. Each of the plurality of through-holes (56) includes an inflow hole (56a) that is located on a side where the inflow port (34) is located and through which air flows in and an outflow hole (56b) that is located on a side where the outflow port (35) is located and through which air flows out.

According to the sixteenth aspect, air that has flowed from the inflow port (34) of the casing (31) into the air flow path (AP) smoothly flows into the through-holes (56). Air that has flowed out from the through-holes (56) smoothly flows into the outflow port (35) of the casing (31). As a result, pressure loss of the air flow path (AP) can be reduced.

A seventeenth aspect is a carbon dioxide recovery system including the adsorption unit (40) according to any one of the first to sixteenth aspects.

### Brief Description of Drawings

[Fig. 1] Fig. 1 is a configuration diagram of a whole carbon dioxide recovery system.
[Fig. 2] Fig. 2 is a perspective view of an adsorption unit. Note that illustration of some through-holes is omitted in Fig. 2.
[Fig. 3] Fig. 3 is an exploded perspective view of the adsorption unit.
[Fig. 4] Fig. 4 is an enlarged perspective view of a substantial part of the adsorption unit.
[Fig. 5] Fig. 5 is a cross-sectional view taken along line V-V of Fig. 2.
[Fig. 6] Fig. 6 is an enlarged cross-sectional view of a region A1 of Fig. 5.
[Fig. 7] Fig. 7 illustrates an adsorption unit according to Modification 1 and corresponds to Fig. 6.
[Fig. 8] Fig. 8 is a schematic configuration diagram of an adsorption unit according to Modification 2.
[Fig. 9] Fig. 9 is a schematic configuration diagram of an adsorption unit according to Modification 3.
[Fig. 10] Fig. 10 is a schematic configuration diagram of an adsorption unit according to Modification 4.
[Fig. 11] Fig. 11 is a schematic configuration diagram of an adsorption unit according to Modification 5.

### Description of Embodiments

Embodiments of the present disclosure are described in detail below with reference to the drawings. Note that the present disclosure is not limited to the embodiments below and can be changed in various ways without departing from the technical idea of the present disclosure. The drawings are for conceptually describing the present disclosure, and therefore dimensions, ratios, and numbers may be exaggerated or simplified as necessary to facilitate understanding.

### (1) Overall Configuration

An embodiment of the present disclosure is a carbon dioxide recovery system (1). The carbon dioxide recovery system (1) of the present example recovers carbon dioxide in atmosphere, in other words, in outdoor air. The carbon dioxide recovery system (1) of the present example constitutes a Direct Air Capture (DAC) system that directly separates and recovers carbon dioxide from atmosphere.

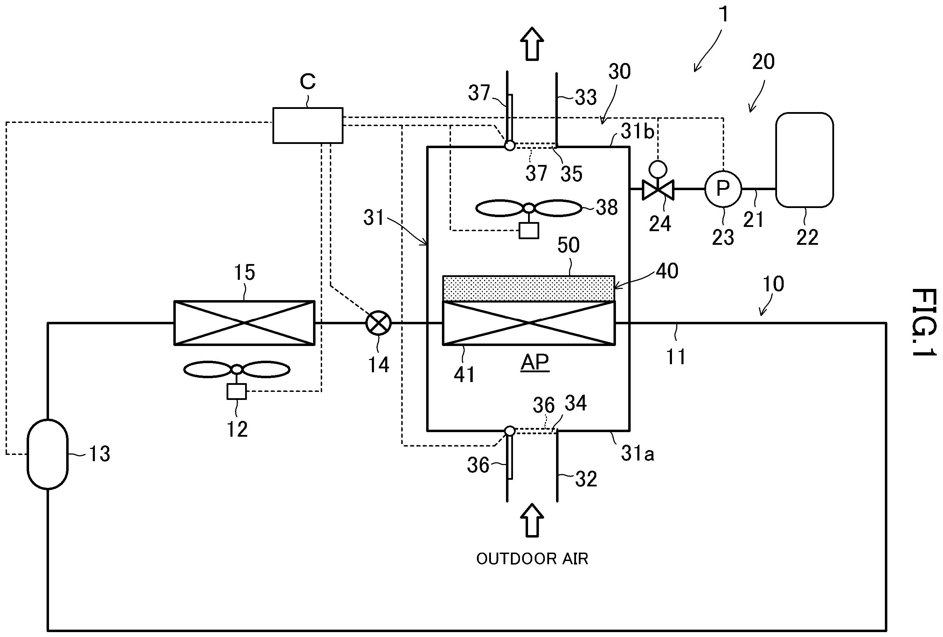

As illustrated in Fig. 1, the carbon dioxide recovery system (1) includes a refrigeration cycle device (10), an adsorption device (30) including an adsorption member (50), a recovery unit (20), and a controller (C). The refrigeration cycle device (10) is a heating device that heats the adsorption member (50). The recovery unit (20) is a device for recovering carbon dioxide desorbed from the adsorption member (50). The controller (C) controls each device of the carbon dioxide recovery system (1).

### (2) Refrigeration Cycle Device

The refrigeration cycle device (10) includes a refrigerant circuit (11) that performs a refrigeration cycle and a first fan (12). The refrigerant circuit (11) is filled with a refrigerant. The refrigerant circuit (11) includes a compressor (13), a first heat exchanger (41), an expansion valve (14), and a second heat exchanger (15). The compressor (13) compresses the refrigerant and discharges the compressed refrigerant. The compressor (13) is configured such that the number of revolutions is variable. The first heat exchanger (41) constitutes a radiator (condenser). The first heat exchanger (41) is provided in the adsorption device (30). The first heat exchanger (41) causes the refrigerant and the adsorption member (50) to exchange heat with each other, and thus heats the adsorption member (50). The expansion valve (14) constitutes a decompression mechanism that decompresses the refrigerant. For example, the expansion valve (14) is constituted by an electronic expansion valve whose opening degree is variable. The second heat exchanger (15) is an air heat exchanger placed outdoors. The first fan (12) is disposed in the vicinity of the second heat exchanger (15). The second heat exchanger (15) causes the refrigerant and outdoor air blown by the first fan (12) to exchange heat with each other.

### (3) Adsorption Device

The adsorption device (30) includes a casing (31), an inflow duct (32), and an outflow duct (33).

The casing (31) is hollow and forms an air flow path (AP) through which air flows. The casing (31) includes a first plate (31a) and a second plate (31b). The first plate (31a) and the second plate (31b) face each other. In the present example, the first plate (31a) is located on a lower side of the casing (31), and the second plate (31b) is located on an upper side of the casing (31).

The casing (31) has an inflow port (34) through which outdoor air flows into the air flow path (AP) and an outflow port (35) through which air in the air flow path (AP) flows out. The inflow port (34) is provided in the first plate (31a). The outflow port (35) is provided in the second plate (31b). The air flow path (AP) extends from the inflow port (34) to the outflow port (35).

The inflow duct (32) is connected to the inflow port (34). The inflow duct (32) allows an outdoor space and the inflow port (34) to communicate with each other. A first damper (36) is provided in the inflow duct (32). The first damper (36) is switched between an opened state (a state indicated by the solid line in Fig. 1) in which the inflow port (34) serving as an inflow portion of the air flow path (AP) is opened and a closed state (a state indicated by the broken line in Fig. 1) in which the inflow port (34) is closed.

The outflow duct (33) is connected to the outflow port (35). The outflow duct (33) allows the outflow port (35) and the outdoor space to communicate with each other. A second damper (37) is provided in the outflow duct (33). The second damper (37) is switched between an opened state (a state indicated by the solid line in Fig. 1) in which the outflow port (35) serving as an outflow portion of the air flow path (AP) is opened and a closed state (a state indicated by the broken line in Fig. 1) in which the outflow port (35) is closed.

The adsorption device (30) includes an adsorption unit (40) and a second fan (38). The adsorption unit (40) and the second fan (38) are disposed in the air flow path (AP). In the present example, the second fan (38) is disposed on a downstream side of air flow relative to the adsorption unit (40). The second fan (38) transports air in the air flow path (AP).

### (3-1) Details of Adsorption Unit

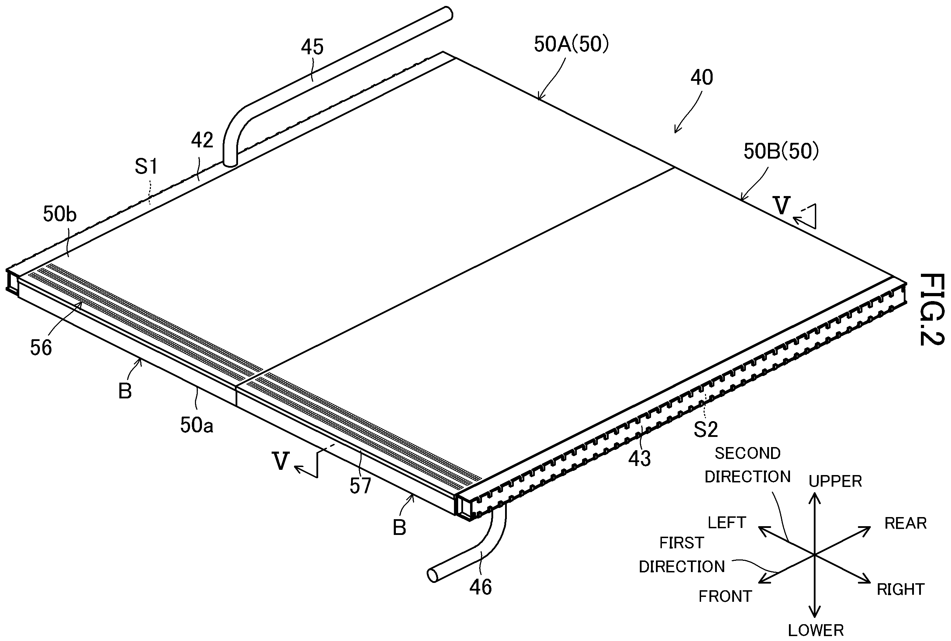

A configuration of the adsorption unit (40) is described in detail with reference to Figs. 2 to 6. Note that terms related to "upper", "lower", "front", "rear", "right", and "left" in the following description are based on directions indicated by the arrows in Fig. 2. In the present example, the air flow direction of the air flow path (AP) corresponds to a vertical direction (up-down direction).

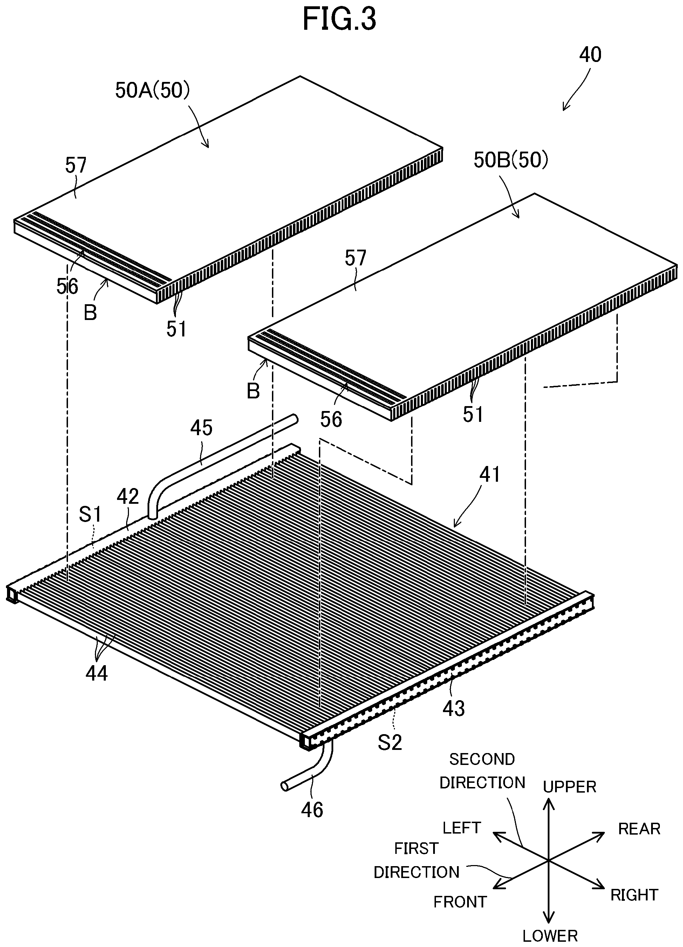

As illustrated in Figs. 2 and 3, the adsorption unit (40) includes the first heat exchanger (41) and the adsorption member (50). The adsorption member (50) is attached to the first heat exchanger (41) to constitute the adsorption unit (40).

### (3-1-1) First Heat Exchanger

The first heat exchanger (41) is disposed in the air flow path (AP) in the casing (31). The first heat exchanger (41) is supported by the casing (31) with a stay (not illustrated) interposed therebetween. The first heat exchanger (41) includes a first header collection tube (42), a second header collection tube (43), and a plurality of flat tubes (44) disposed between the header collection tubes (41 and 42).

The first header collection tube (42) is located at a left end of the first heat exchanger (41). The second header collection tube (43) is located at a right end of the first heat exchanger (41). The first header collection tube (42) and the second header collection tube (43) each form a tubular shape extending in the front-rear direction. The first header collection tube (42) and the second header collection tube (43) according to the present example each have a substantially rectangular cross section when viewed in a tube axial direction. Both ends of the first header collection tube (42) and the second header collection tube (43) in a longitudinal direction (front-rear direction) are closed.

A first pipe (45) is connected to the first header collection tube (42). A first header space (S1) is provided in the first header collection tube (42). The first header space (S1) allows an inside of the first pipe (45) and insides of the plurality of flat tubes (44) to communicate with each other. The first header collection tube (42) according to the present example, for example, distributes a refrigerant including a liquid flowing out from the first pipe (45) into the flat tubes (44) through the first header space (S1).

A second pipe (46) is connected to the second header collection tube (43). A second header space (S2) is provided in the second header collection tube (43). The second header space (S2) allows an inside of the second pipe (46) and insides of the plurality of flat tubes (44) to communicate with each other. The second header collection tube (43) according to the present example causes the refrigerant including gas flowing out from the flat tubes (44) to merge in the second header space (S2). The refrigerant that has merged in the second header space (S2) flows out to the second pipe (46).

The plurality of flat tubes (44) are disposed between the first header collection tube (42) and the second header collection tube (43). The flat tubes (44) constitute a heat transfer tube through which the refrigerant flows. As illustrated in Fig. 3, the plurality of flat tubes (44) are arranged in a first direction. In the present example, the direction (first direction) in which the plurality of flat tubes (44) are arranged corresponds to the front-rear direction. The plurality of flat tubes (44) extend in the second direction between the first header collection tube (42) and the second header collection tube (43). A direction in which the flat tubes (44) extend or a tube axial direction of the flat tubes (44) corresponds to the second direction. In this example, the tube axial direction of the flat tubes (44) corresponds to the left-right direction.

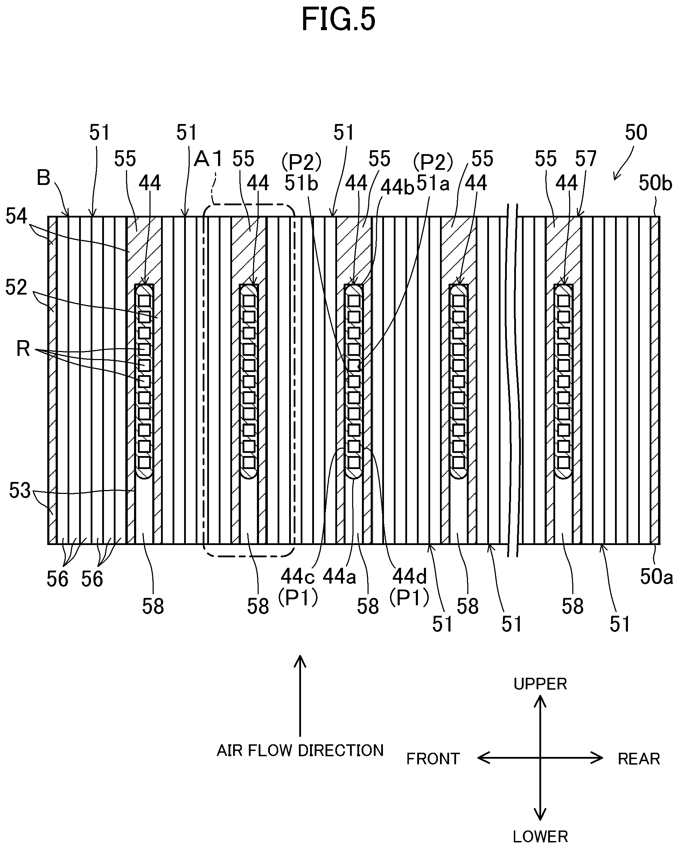

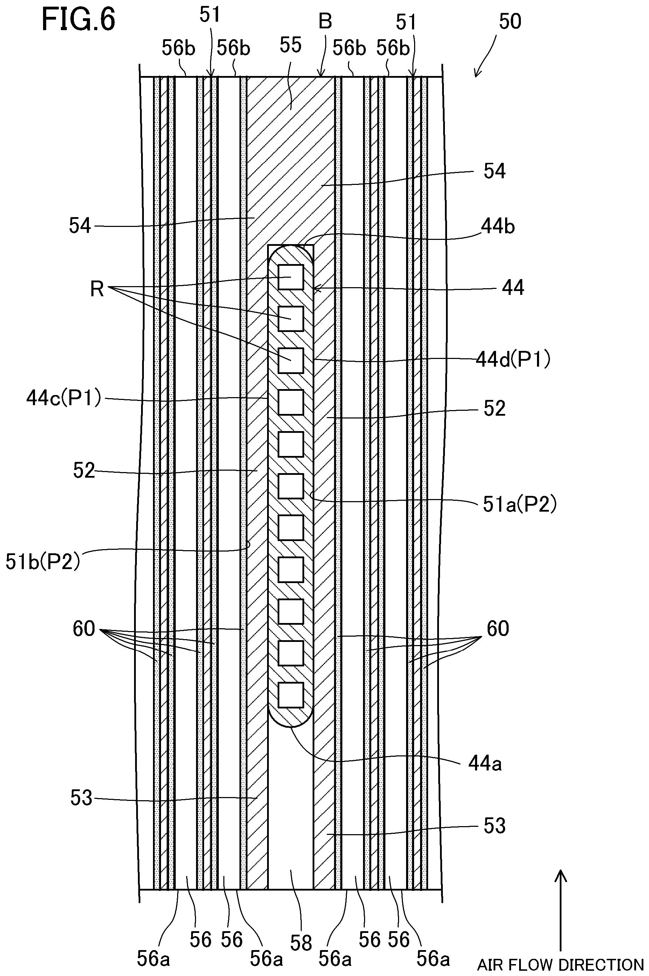

As illustrated in Figs. 5 and 6, the flat tubes (44) have flat shapes extending along the air flow direction in a cross-sectional view as viewed from the tube axial direction. A surface of each of the flat tubes (44) includes a first arc portion (44a), a second arc portion (44b), a first flat portion (44c), and a second flat portion (44d). The first arc portion (44a) is located on an inflow side of the air flow. The second arc portion (44b) is located on a downstream side of the air flow. The first flat portion (44c) and the second flat portion (44d) each constitute a tube-side flat portion (P1). The tube-side flat portion (P1) has a flat surface shape extending in a direction along the air flow. The first flat portion (44c) is located on one side (in the present example, on a front side) of each of the flat tubes (44) in the first direction and is located between the first arc portion (44a) and the second arc portion (44b). The second flat portion (44d) is located on the other side (in the present example, on a rear side) of each of the flat tubes (44) in the first direction and is located between the first arc portion (44a) and the second arc portion (44b). The first flat portion (44c) of one of adjacent ones of the flat tubes (44) faces the second flat portion (44d) of the other one of the adjacent ones of the flat tubes (44).

A plurality of refrigerant flow passages (R) are provided in each of the flat tubes (44). That is, each of the flat tubes (44) constitutes a multi-port flat tube including the plurality of refrigerant flow passages (R). The plurality of refrigerant flow passages (R) are arranged in a direction (in the present example, the up-down direction) in which air flows. Each of the refrigerant flow passages (R) extends in the second direction from one end to the other end of each of the flat tubes (44) in the longitudinal direction. One end of each of the refrigerant flow passages (R) communicates with the first header space (S1), and the other end of each of the refrigerant flow passages (R) communicates with the second header space (S2).

### (3-1-2) Adsorption Member

The adsorption member (50) is a member for adsorbing carbon dioxide. The adsorption member (50) includes a base member (B) and an adsorbent (60) carried on the base member (B). The base member (B) according to the present example is made of a ceramic material. The material constituting the base member (B) preferably has a thermal conductivity of 1 [W/(m·K)] or higher.

As illustrated in Fig. 2, the adsorption member (50) is disposed between the first header collection tube (42) and the second header collection tube (43). The adsorption member (50) is provided throughout a region between the first header collection tube (42) and the second header collection tube (43).

As illustrated in Fig. 3, the adsorption unit (40) according to the present example includes a first adsorption member (50A) and a second adsorption member (50B) as the adsorption member (50). The first adsorption member (50A) and the second adsorption member (50B) are arranged adjacent to each other in the second direction. The first adsorption member (50A) is located in a left-side portion of the first heat exchanger (41), and the second adsorption member (50B) is located in a right-side portion of the first heat exchanger (41). In the following description, the first adsorption member (50A) and the second adsorption member (50B) are sometimes referred to as the adsorption member (50) for convenience of description.

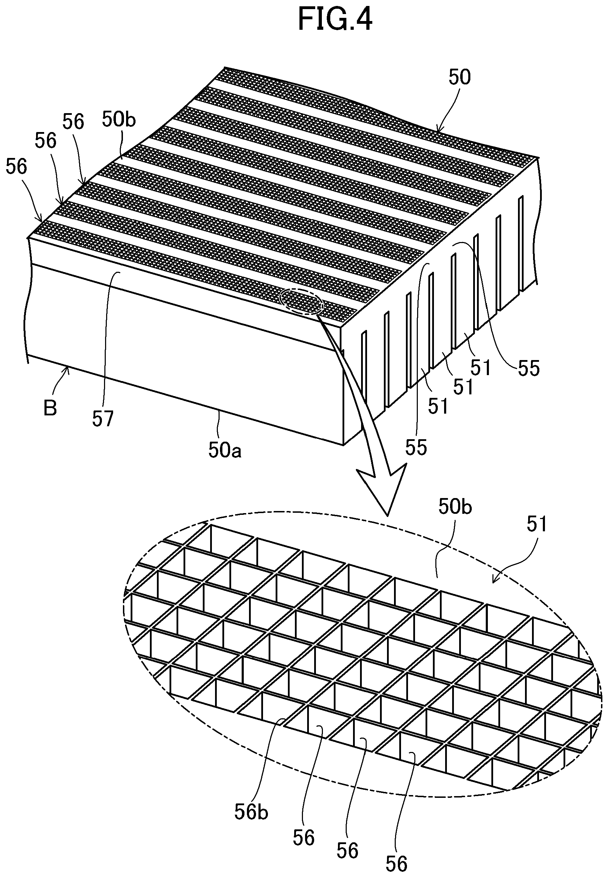

As illustrated in Figs. 4 and 5, the adsorption member (50) includes a plurality of adsorption portions (51) and a plurality of coupling portions (55) each of which couples adjacent ones of the adsorption portions (51). Each of the plurality of adsorption portions (51) includes the base member (B) and the adsorbent (60). Each of the plurality of coupling portions (55) includes the base member (B).

Each of the adsorption portions (51) is partially disposed between adjacent ones of the flat tubes (44). Each of the adsorption portions (51) has a rectangular parallelepiped shape extending in the second direction along the flat tubes (44). Each of the adsorption portions (51) includes an intermediate portion (52) that overlaps the flat tubes (44) in the first direction, an upstream portion (53) continuous with the intermediate portion (52) on an upstream side of the air flow, and a downstream portion (54) continuous with the intermediate portion (52) on a downstream side of the air flow.

Each of the adsorption portions (51) includes a third flat portion (51a) and a fourth flat portion (51b). The third flat portion (51a) and the fourth flat portion (51b) each constitute an adsorption-side flat portion (P2) that faces the tube-side flat portion (P1). The third flat portion (51a) is located on one side (in the present example, on a front side) of each of the adsorption portions (51) in the first direction, and the fourth flat portion (51b) is located on the other side (in the present example, on a rear side) of each of the adsorption portions (51) in the first direction. The third flat portion (51a) of each of the adsorption portions (51) faces the second flat portion (44d) of a corresponding one of the flat tubes (44), and the fourth flat portion (51b) of each of the adsorption portions (51) faces the first flat portion (44c) of a corresponding one of the flat tubes (44). In the present embodiment, the tube-side flat portion (P1) and the adsorption-side flat portion (P2) are in surface contact with each other. Specifically, the third flat portion (51a) of each of the adsorption portions (51) and the second flat portion (44d) of a corresponding one of the flat tubes (44) are in surface contact with each other, and the fourth flat portion (51b) of each of the adsorption portions (51) and the first flat portion (44c) of a corresponding one of the flat tubes (44) are in surface contact with each other.

The base member (B) of each of the adsorption portions (51) has a plurality of through-holes (56). The through-holes (56) are holes through which air passes. The through-holes (56) according to the present example extend in the air flow direction. In other words, the through-holes (56) extend in a direction crossing the first direction and crossing the second direction. Strictly, the through-holes (56) extend in a direction orthogonal to the first direction and orthogonal to the second direction.

Each of the through-holes (56) includes an inflow hole (56a) and an outflow hole (56b). The inflow hole (56a) is provided in a first surface (50a) of the adsorption member (50) on an air inflow side. The outflow hole (56b) is provided in a second surface (50b) of the adsorption member (50) on an air outflow side. The inflow hole (56a) is located on a side where the inflow port (34) of the casing (31) is located, and the outflow hole (56b) is located on a side where the outflow port (35) of the casing (31) is located. Each of the through-holes (56) extends from the inflow hole (56a) to the outflow hole (56b). In the present example, the first surface (50a) constitutes a lower surface of the adsorption member (50), and the second surface (50b) constitutes an upper surface of the adsorption member (50).

As illustrated in Fig. 4, the through-holes (56) are arranged in a grid pattern. Each of the through-holes (56) has a rectangular shape (strictly, a square shape) in a cross-sectional view as viewed in the air flow direction. The plurality of through-holes (56) are arranged from one end to the other end of each of the adsorption portions (51) in the longitudinal direction (second direction). The plurality of through-holes (56) are arranged from one end to the other end of each of the adsorption portions (51) in a width direction (first direction).

Each of the coupling portions (55) couples the adsorption portions (51) adjacent in the first direction to each other. The plurality of adsorption portions (51) and the plurality of coupling portions (55) are integrated. This coupling forms a rectangular plate-shaped base portion (57) on an air downstream side (upper side) of the adsorption member (50). In other words, the base portion (57) is configured such that the downstream portion (54) of the adsorption member (50) and the coupling portion (55) are alternately continuous with each other. Each of the coupling portions (55) according to the present example does not have the through-holes (56).

The first surface (50a) of the adsorption member (50) is provided with a plurality of grooves (58). Each of the plurality of grooves (58) constitutes a space formed between adjacent ones of the adsorption portions (51). The plurality of grooves (58) are provided in a lower portion of the adsorption member (50). The grooves (58) extend from one end to the other end of the adsorption member (50) in the second direction. The grooves (58) extend toward the downstream side when viewed in the second direction. Each of the grooves (58) constitutes a space extending from the first surface (50a) of the adsorption member (50) to the coupling portion (55). This space has a flat rectangular parallelepiped shape extending in the second direction.

The flat tubes (44) are fitted into the grooves (58). In the present example, the flat tubes (44) are fitted into the grooves (58) with substantially no gap interposed therebetween. Accordingly, as described above, the flat tubes (44) and the adsorption member (50) are in surface contact with each other. One flat tube (44) is fitted into each of the grooves (58) of the adsorption member (50), and thus the adsorption member (50) is supported by the first heat exchanger (41).

As illustrated in Fig. 6, the adsorbent (60) is carried on the base member (B) of each of the adsorption portions (51). The adsorbent (60) according to the present example is carried at least on inner surfaces of the through-holes (56) of the base member (B). The adsorbent (60) is constituted by a liquid film.

The adsorbent (60) has a property of adsorbing carbon dioxide. Strictly, as a temperature of the adsorbent (60) becomes higher, carbon dioxide is more likely to be desorbed from the adsorbent (60), and as the temperature of the adsorbent (60) becomes lower, carbon dioxide is more likely to be adsorbed by the adsorbent (60). The "adsorption" as used herein includes not only adsorption of carbon dioxide onto a surface of a solid or liquid, but also absorption of carbon dioxide into a solid or liquid. Furthermore, the "adsorption" includes not only physical adsorption, but also chemical adsorption. The adsorbent (60) is constituted by a liquid film.

### (4) Recovery Unit

As illustrated in Fig. 1, the recovery unit (20) includes a recovery flow passage (21), a tank (22), a pump (23), and an opening/closing valve (24). An inflow end of the recovery flow passage (21) is connected to the casing (31). An inflow end of the recovery flow passage (21) communicates with the air flow path (AP). An outflow end of the recovery flow passage (21) is connected to the tank (22). The tank (22) stores therein recovered carbon dioxide. The pump (23) decompresses an inside of the casing (31) and transports carbon dioxide desorbed from the adsorption member (50). The opening/closing valve (24) is provided in the recovery flow passage (21) and opens and closes the recovery flow passage (21). The recovery unit (20) may include a damper that opens and closes the recovery flow passage (21) instead of the opening/closing valve (24).

### (5) Controller

As illustrated in Fig. 1, the controller (C) controls the refrigeration cycle device (10), the adsorption device (30), and the recovery unit (20). Specifically, the controller (C) controls opened/closed states of the first damper (36) and the second damper (37), ON/OFF states of the first fan (12) and the second fan (38), an ON/OFF state of the compressor (13), the number of revolutions of the compressor (13), the opening degree of the expansion valve (14), an ON/OFF state of the pump (23), and opened/closed states of the opening/closing valve (24). The controller (C) may control the number of revolutions of the first fan (12), the second fan (38), or the pump (23).

The controller (C) includes a microcomputer and a memory device that stores therein software for causing the microcomputer to operate.

### (6) Operation of Carbon Dioxide System

The carbon dioxide recovery system (1) performs an adsorption operation that is a first operation and a regeneration operation that is a second operation. The carbon dioxide recovery system (1) repeatedly performs the adsorption operation and the regeneration operation alternately every predetermined period of time.

### (6-1) Adsorption Operation

In the adsorption operation, the first damper (36) and the second damper (37) are in an opened state (the state indicated by the solid line in Fig. 1), and the opening/closing valve (24) is in a closed state. The compressor (13), the first fan (12), and the pump (23) are in a stopped state, and the second fan (38) is in an operating state. The refrigeration cycle device (10) does not perform a refrigeration cycle.

When the second fan (38) operates, outdoor air passes through the inflow duct (32) and the inflow port (34) in this order, and flows through the air flow path (AP) in the casing (31). The air in the air flow path (AP) flows through the through-holes (56) of the adsorption member (50). During this process, carbon dioxide in the air is adsorbed by the adsorbent (60). The air that has flowed out from the through-holes (56) and passed the adsorption unit (40) passes through the outflow port (35) and the outflow duct (33) in this order and is then discharged to an outside.

### (6-2) Regeneration Operation

In the regeneration operation, the first damper (36) and the second damper (37) are in a closed state (the state indicated by the broken line in Fig. 1), and the opening/closing valve (24) is in an opened state. The compressor (13), the first fan (12), and the pump (23) are in an operating state, and the second fan (38) is in a stopped state. The refrigeration cycle device (10) performs a refrigeration cycle in which the first heat exchanger (41) functions as a radiator (condenser) and the second heat exchanger (15) functions as an evaporator.

In the refrigerant circuit (11), the compressor (13) compresses a refrigerant and discharges the compressed refrigerant. The refrigerant discharged from the compressor (13) flows through the first heat exchanger (41). Specifically, in the first heat exchanger (41), the refrigerant in the first header collection tube (42) is distributed into the flat tubes (44). Heat of the refrigerant in the flat tubes (44) transfers to the adsorption portions (51). As a result, carbon dioxide adsorbed by the adsorbent (60) is desorbed. The refrigerant that has flowed through the flat tubes (44) and has been condensed merges in the second header collection tube (43) and is then decompressed by the expansion valve (14). The decompressed refrigerant absorbs heat from outdoor air in the second heat exchanger (15) and evaporates. The refrigerant that has evaporated is compressed again by the compressor (13).

When the pump (23) operates, the air flow path (AP) of the casing (31) is decompressed. When carbon dioxide is desorbed from the adsorption member (50), a carbon dioxide concentration in the air in the air flow path (AP) increases. Carbon dioxide thus concentrated flows through the recovery flow passage (21) and is recovered in the tank (22).

In the regeneration operation, the refrigeration cycle device (10) is configured to heat the adsorption member (50) in a range of 80°C or more and 100°C or less in a case where an amine-based substance is used as the adsorbent (60). Specifically, in the regeneration operation, the controller (C) adjusts a temperature of the refrigerant in the first heat exchanger (41) by controlling the number of revolutions of the compressor (13). In this process, the controller (C) may control the opening degree of the expansion valve (14).

### (7) Features

(7-1)
The adsorption unit (40) includes the first heat exchanger (41) that includes the plurality of heat transfer tubes (44) through which the refrigerant serving as a heat medium flows and is disposed in the air flow path (AP) through which air flows, and the adsorption member (50) having the adsorbent (60) that adsorbs carbon dioxide in the air. The adsorption member (50) includes the plurality of adsorption portions (51) each of which is disposed between adjacent ones of the heat transfer tubes (44), and each of the plurality of adsorption portions (51) has the plurality of holes (56) through which air passes and carries the adsorbent (60).

According to this configuration, in the adsorption operation, when air in the air flow path (AP) flows through the plurality of holes (56) of the adsorption portions (51), carbon dioxide in the air is adsorbed by the adsorbent (60). Since efficiency of contact between air flowing through the plurality of holes (56) and the adsorbent (60) is high, carbon dioxide adsorption capability of the adsorbent (60) can be increased.

According to this configuration, in the regeneration operation, heat of the refrigerant in the heat transfer tubes (44) transfers to the adsorption portions (51). Since each of the adsorption portions (51) is at least partially disposed between adjacent ones of the heat transfer tubes (44), heat of the refrigerant easily transfers to the adsorption portions (51). As a result, the regeneration capability of the adsorbent (60) can be increased.

Since both of the adsorption capability and the regeneration capability can be increased as described above, the adsorption unit (40) can improve carbon dioxide recovery efficiency.

(7-2)
The heat transfer tubes (44) and the adsorption portions (51) are in contact with each other. Accordingly, thermal resistance between the heat transfer tubes (44) and the adsorption portions (51) is small, and therefore heat of the heat transfer tubes (44) easily transfers to the adsorption portions (51). As a result, the regeneration capability of the adsorbent (60) can be increased.

(7-3)
The heat transfer tubes are the flat tubes (44). Therefore, heat of the refrigerant in the flat tubes (44) easily transfers to the adsorption portions (51).

The tube-side flat portion (P1) of each of the flat tubes (44) and the adsorption-side flat portion (P2) of a corresponding one of the adsorption portions (51) face each other, and therefore heat of the refrigerant in the flat tubes (44) more easily transfers to the adsorption portions (51).

Furthermore, the tube-side flat portion (P1) and the adsorption-side flat portion (P2) are in surface contact with each other, and therefore heat of the refrigerant in the flat tubes (44) more easily transfers to the adsorption portions (51).

(7-4)
Each of the adsorption portions (51) has, as the holes, the plurality of through-holes (56) extending in a predetermined direction. Accordingly, pressure loss during passage of air through the adsorption portions (51) can be reduced.

In particular, the through-holes (56) extend in a direction crossing (strictly, orthogonal to) the first direction that is the direction in which the flat tubes (44) are arranged. This can suppress interference between the through-holes (56) and the flat tubes (44), thereby further reducing pressure loss during passage of air through the adsorption portions (51).

The through-holes (56) extend in a direction crossing (strictly, orthogonal to) not only the first direction, but also the second direction that is the tube axial direction of the flat tubes (44). It is therefore possible to reduce pressure loss during passage of air through the adsorption unit (40).

(7-5)
The adsorption member (50) includes the coupling portions (55) each of which couples the plurality of adsorption portions (51). This makes it possible to handle the plurality of adsorption portions (51) integrally, thereby making it possible to easily perform work related to attachment, detachment, or replacement of the adsorption member (50).

The adsorption member (50) has the plurality of grooves (58) each of which is provided between adjacent ones of the adsorption portions (51), and each of the plurality of heat transfer tubes (44) is fitted into a corresponding one of the plurality of grooves (58). By fitting the heat transfer tubes (44) into the grooves (58) of the adsorption member (50), work related to attachment, detachment, or replacement of the adsorption member (50) can be easily performed.

The heat transfer tubes are the flat tubes (44), and the grooves (58) are provided along the tube-side flat portions (P1) of the flat tubes (44). Therefore, the flat tubes (44) can be stably held in the grooves (58). As a result, rattling of the adsorption member (50) with respect to the first heat exchanger (41) can be suppressed.

The plurality of grooves (58) are provided in a lower portion of the adsorption member (50). The first heat exchanger (41) supports the adsorption member (50) from below. Since the first heat exchanger (41) functions as a support for the adsorption member (50), the number of components can be reduced.

(7-6)
The adsorption device (30) includes the adsorption unit (40) and the casing (31) that forms the air flow path (AP). The casing (31) has the inflow port (34) through which air flows into the air flow path (AP) and the outflow port (35) through which air in the air flow path (AP) flows out. Each of the plurality of through-holes (56) includes the inflow hole (56a) that is located on a side where the inflow port (34) is located and through which air flows in and the outflow hole (56b) that is located on a side where the outflow port (35) is located and through which air flows out.

According to this configuration, air that has flowed from the inflow port (34) of the casing (31) into the air flow path (AP) smoothly flows into the through-holes (56). The air that has flowed out from the through-holes (56) smoothly flows into the outflow port (35) of the casing (31). As a result, pressure loss of the air flow path (AP) can be reduced.

(7-7)
The base member (B) according to the embodiment is made of a material having a thermal conductivity of 1 [W/(m·K)] or higher. Accordingly, heat of the heat transfer tubes (44) easily transfers to the adsorbent (60) through the base member (B), and therefore regeneration capability of the adsorption member (50) can be increased.

### (8) Modifications

The above embodiment may be modified as follows.

### (8-1) Modification 1

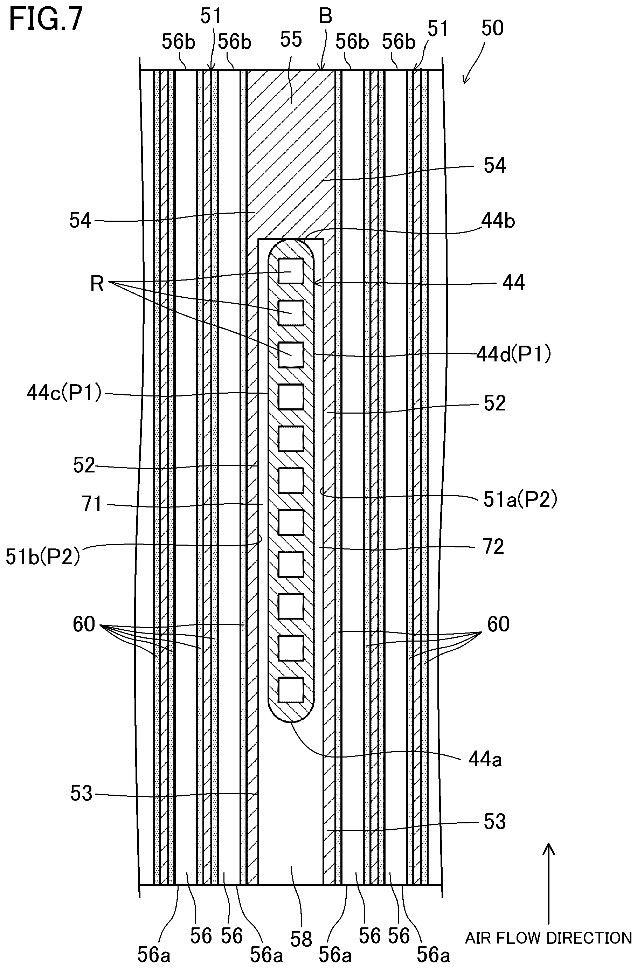

As illustrated in Fig. 7, in Modification 1, gaps (71,72) are provided between the flat tubes (44) and the adsorption portions (51). In the present example, the gaps (71,72) are provided in the first direction that is a direction in which the flat tubes (44) are arranged. The gaps (71,72) are provided between the tube-side flat portions (P1) of the flat tubes (44) and the adsorption-side flat portions (P2) of the adsorption portions (51). More specifically, a first gap (71) is provided between the first flat portion (44c) of each of the flat tubes (44) and the fourth flat portion (51b) of a corresponding one of the adsorption portions (51). A second gap (72) is provided between the second flat portion (44d) of each of the flat tubes (44) and the third flat portion (51a) of a corresponding one of the adsorption portions (51).

The presence of the gaps (71,72) makes it easy to perform work of inserting each of the adsorption portions (51) between adjacent ones of the flat tubes (44) and work of extracting each of the adsorption portions (51) from between adjacent ones of the heat transfer tubes (44). Note that it is also possible to employ a configuration in which the first gap (71) or the second gap (72) is not provided and the tube-side flat portion (P1) on one side of each of the flat tubes (44) is in contact with the adsorption-side flat portion (P2) of a corresponding one of the adsorption portions (51).

### (8-2) Modification 2

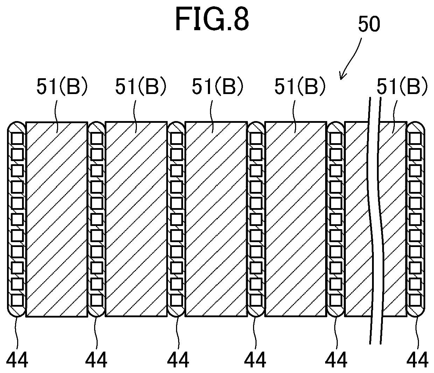

As illustrated in Fig. 8, the adsorption unit (40) according to Modification 2 does not include the coupling portions (55) according to the above embodiment. Each of the adsorption portions (51) is provided between adjacent ones of the flat tubes (44). Each of the adsorption portions (51) is sandwiched between the flat tubes (44) on both sides thereof and is thus held between the flat tubes (44). In Modification 2, the plurality of adsorption portions (51) are completely separated from each other. In Modification 2, the plurality of adsorption portions (51) can be supported by the heat exchanger (41) without the coupling portions (55).

### (8-3) Modification 3

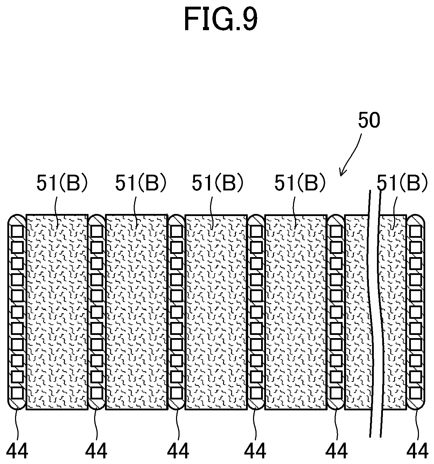

As illustrated in Fig. 9, the adsorption unit (40) according to Modification 3 is configured such that the base member (B) of the adsorption member (50) that carries the adsorbent (60) is made of a fibrous material such as a metal fiber or a carbon fiber. In Modification 3, pores inside the fibers of the base member (B) constitute holes through which air flows. Although the adsorption member (50) in the example of Fig. 9 does not include the coupling portions (55), the adsorption member (50) may include the coupling portions (55), as in the embodiment.

### (8-4) Modification 4

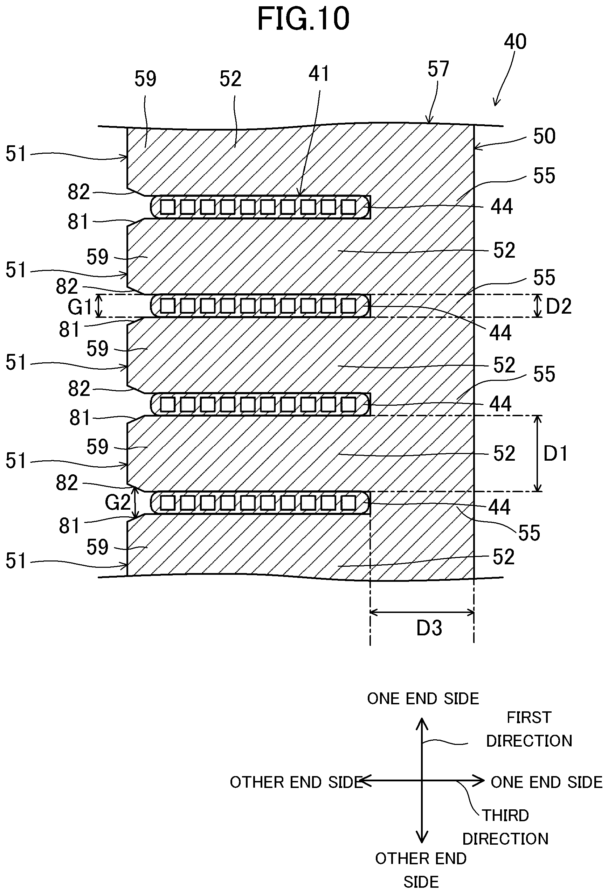

As illustrated in Fig. 10, the first heat exchanger (41) of the adsorption unit (40) according to Modification 4 is basically identical to that in the above embodiment. A direction in which the flat tubes (44) are arranged is defined as a first direction, a direction (tube axial direction) in which the flat tubes (44) extend is defined as a second direction, and a direction orthogonal to the first direction and the second direction is defined as a third direction. The third direction corresponds to a width direction of the flat tubes (44) or an air flow direction.

As described above, each of the adsorption portions (51) is inserted between adjacent ones of the flat tubes (44). The adsorption portions (51) extend in the third direction from one end side where the coupling portions (55) are located toward the other end side. By inserting each of the adsorption portions (51) between adjacent ones of the flat tubes (44), the adsorption member (50) is attached to the first heat exchanger (41). By extracting each of the adsorption portions (51) from between adjacent ones of the flat tubes (44), the adsorption member (50) is detached from the first heat exchanger (41).

Each of the adsorption portions (51) according to Modification 4 has, as enlarging surfaces, a first enlarging surface (81) and a second enlarging surface (82). The first enlarging surface (81) and the second enlarging surface (82) are located at the other end portion of each of the adsorption portions (51). Specifically, each of the adsorption portions (51) includes an intermediate portion (52) that overlaps the flat tubes (44) in the first direction in a cross-sectional view as viewed in the second direction and a leading end portion (59) that extends from the intermediate portion (52) to the other end side in the third direction. The leading end portion (59) extends toward the other end side in the third direction beyond the flat tubes (44). The first enlarging surface (81) and the second enlarging surface (82) are provided at the leading end portion (59) of each of the adsorption portions (51). A length of the intermediate portion (52) in the third direction is longer than a length of the leading end portion (59) in the third direction.

The first enlarging surface (81) is provided at one end side of each of the adsorption portions (51) in the first direction, and the second enlarging surface (82) is provided at the other end side of each of the adsorption portions (51) in the first direction. The first enlarging surface (81) and the second enlarging surface (82) are located at corner portions of each of the adsorption portions (51). The first enlarging surface (81) forms an inclined surface that extends downward toward the other end side in the third direction in the cross-sectional view as viewed in the second direction. The second enlarging surface (82) forms an inclined surface that extends upward toward the other end side in the third direction in the cross-sectional view as viewed in the second direction.

The first enlarging surface (81) and the second enlarging surface (82) enlarge an interval between adjacent ones of the adsorption portions (51) in the first direction from one end side toward the other end side in the third direction. Specifically, an interval between adjacent intermediate portions (52) in the first direction is defined as a first interval (G1), and an interval between adjacent leading end portions (59) in the first direction is defined as a second interval (G2). The first interval (G1) is constant throughout the third direction. The first interval (G1) is substantially equal to a thickness of each of the flat tubes (44). The second interval (G2) is larger than the first interval (G1). The second interval (G2) gradually increases toward the other end side in the third direction.

As described above, in Modification 4, an interval between adjacent ones of the adsorption portions (51) increases on the other end side in the third direction. This makes it easy to insert each of the adsorption portions (51) between adjacent ones of the flat tubes (44). This allows a worker to easily attach the adsorption member (50) to the first heat exchanger (41). In addition, it is easy to extract each of the adsorption portions (51) from between adjacent ones of the flat tubes (44). This allows the worker to easily detach the adsorption member (50) from the first heat exchanger (41).

Since the intermediate portion (52) and each of the flat tubes (44) are substantially in contact with each other, heat transfer between each of the flat tubes (44) and the intermediate portion (52) can be promoted. Furthermore, since each of the flat tubes (44) and the intermediate portion (52) are in contact with each other, the adsorption member (50) is less likely to be detached from the first heat exchanger (41).

The leading end portion (59) is at a position where the leading end portion (59) is not in contact with the flat tubes (44). Therefore, even in a case where the first enlarging surface (81) and the second enlarging surface (82) are provided at the leading end portion (59), heat transfer between each of the flat tubes (44) and the intermediate portion (52) is hardly affected.

In Modification 4, a first thickness (D1) of each of the adsorption portions (51) in the first direction is larger than a second thickness (D2) of each of the flat tubes (44) in the first direction. It is therefore possible to improve strength of the adsorption portions (51).

In Modification 4, a thickness (D3) of the base portion (57) in the third direction is larger than the first thickness (D1) of each of the adsorption portions (51) in the first direction. It is therefore possible to secure strength of the base portion (57) for supporting the plurality of adsorption portions (51).

In Modification 4, an arc portion is provided at the other end side of each of the flat tubes (44) in the third direction in the cross-sectional view as viewed in the second direction. Accordingly, a pitch between adjacent ones of the flat tubes (44) on the other end side is wide, and therefore it is easy to insert and extract the adsorption portions (51).

In Modification 4, each of the adsorption portions (51) may have only the first enlarging surface (81) or only the second enlarging surface (82).

In Modification 4, the first enlarging surface (81) and the second enlarging surface (82) may be provided from the leading end portion (59) to the intermediate portion (52).

In Modification 4, the first enlarging surface (81) and the second enlarging surface (82) need not necessarily be inclined. The first enlarging surface (81) and the second enlarging surface (82) may be stepped surfaces or arc surfaces.

### (8-5) Modification 5

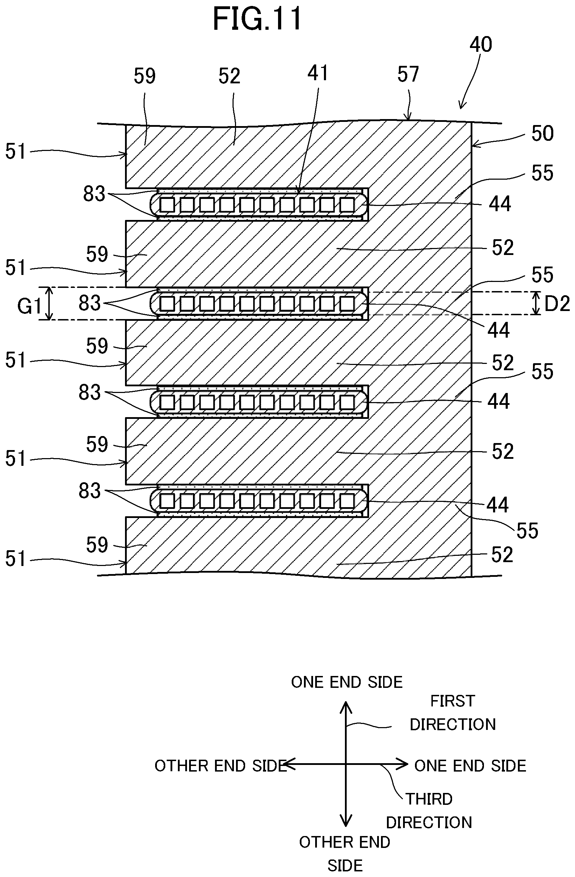

In Modification 5 illustrated in Fig. 11, each of the adsorption portions (51) does not have the first enlarging surface (81) and the second enlarging surface (82), unlike Modification 4. In Modification 5, the first interval (G1) that is constant throughout the third direction is provided between adjacent ones of the adsorption portions (51). The first interval (G1) is substantially larger than the second thickness (D2) of each of the flat tubes (44). In other words, a slight gap is provided between each of the flat tubes (44) and a corresponding one of the adsorption portions (51). This makes it easy to insert and extract each of the adsorption portions (51) between adjacent ones of the flat tubes (44).

In Modification 5, a coating film (83) made of a material such as grease is provided in the gap between each of the flat tubes (44) and a corresponding one of the adsorption portions (51). The coating film (83) functions as a promotion unit that promotes heat transfer between the flat tube (44) and the adsorption portion (51). This makes it possible to secure heat transfer between the flat tube (44) and the adsorption portion (51) while providing a gap between the flat tube (44) and the adsorption portion (51). The coating film (83) also functions as a lubricant that reduces frictional resistance between the flat tube (44) and the adsorption portion (51). This makes it easy to insert and extract each of the adsorption portions (51) between adjacent ones of the flat tubes (44).

In Modification 5, a resin material having elasticity or flexibility may be provided in the gap between each of the flat tubes (44) and a corresponding one of the adsorption portions (51). This makes it easy to insert and extract each of the adsorption portions (51) between adjacent ones of the flat tubes (44), and the resin material functions as a buffer material.

### (9) Other Embodiments

The above embodiment may have the following configurations.

The carbon dioxide recovery system (1) need not be a DAC system that directly recovers carbon dioxide in atmosphere. For example, the carbon dioxide recovery system (1) may recover carbon dioxide in a mixture of air and industrial exhaust gas.

The heating device may be an electric heater or a heat source that uses exhaust heat. The heating device may be a hot water supplying device that supplies high-temperature water as a heat medium to the heat transfer tubes (the flat tubes (44)) of the adsorption unit (40).

The decompression mechanism may be a capillary tube or a temperature-sensitive expansion valve.

The adsorption member (50) may adsorb carbon dioxide in indoor air instead of carbon dioxide in outdoor air. The adsorption member (50) may be, for example, applied to a ventilation device for indoor ventilation.

The adsorbent (60) may be carried throughout the base member (B).

The material of the base member (B) of the adsorption member (50) that carries the adsorbent (60) may be a metal. The base member (B) may be made of a porous material. In this case, pores in the porous material constitute holes through which air flows.

In a case where an amine-based substance is used as the adsorbent (60), silica gel, a polymer, or the like that functions as a functional group may be carried on a surface of a base member made of a metal material by coating.

The second fan (38) may be provided in the inflow duct (32) or the outflow duct (33). The second fan (38) may be provided on an upstream side relative to the adsorption unit (40) in the air flow path (AP).

The first heat exchanger (41) may include no header collection tube and may be arranged such that a plurality of heat transfer tubes are arranged between two end plates. In this case, the plurality of heat transfer tubes are connected by a U-tube disposed outside the end plates. The first heat exchanger may include a device that distributes a refrigerant into the plurality of heat transfer tubes and a device for merging that merges the refrigerant in the plurality of heat transfer tubes.

The heat transfer tubes of the first heat exchanger (41) need not be the flat tubes (44) and may be circular tubes. The flat tubes (44) may have only one hole.

The adsorption member (50) includes the first adsorption member (50A) and the second adsorption member (50B) that are divided members. However, the adsorption member (50) may be constituted by one member or may include three or more divided members. The plurality of divided members may be arranged not in the first direction but in the second direction.

The first heat exchanger (41) according to the embodiment is arranged such that the first direction that is a direction in which the heat transfer tubes (44) are arranged is oriented in a horizontal direction. However, the first heat exchanger (41) may be arranged such that the first direction that is a direction in which the heat transfer tubes (44) are arranged is oriented in a vertical direction or is oriented in an oblique direction between the vertical direction and the horizontal direction.

Each of the adsorption portions (51) may be entirely located between adjacent flat tubes (44).

The plurality of through-holes (56) may be, for example, holes extending in the second direction. That is, the through-holes (56) preferably extend in a direction crossing (strictly, a direction orthogonal to) the first direction that is a direction in which the flat tubes (44) are arranged.

The coupling portions (55) may carry the adsorbent (60). The coupling portions (55) may be provided with the plurality of through-holes (56), and the adsorbent (60) may be carried in the through-holes (56).

Although the embodiments and modifications have been described above, it will be understood that various changes in form and details may be made without departing from the spirit and scope of the claims. Further, the above embodiment, modifications, and other embodiments may be appropriately combined or substituted as long as the functions of the subject matter of the present disclosure are not impaired.

The expressions "first", "second", "third" and so on described above are used to distinguish terms to which these expressions are assigned, and do not limit the number or order of those terms.

### Industrial Applicability

As described above, the present disclosure is useful for an adsorption unit, an adsorption device, and a carbon dioxide recovery system.

### Reference Signs List

- 1: carbon dioxide recovery system
- 30: adsorption device
- 31: casing
- 34: inflow port
- 35: outflow port
- 40: adsorption unit
- 41: first heat exchanger (heat exchanger)
- 44: flat tube (heat transfer tube)
- 50: adsorption member
- 51: adsorption portion
- 55: coupling portion
- 56: through-hole (hole)
- 56a: inflow hole
- 56b: outflow hole
- 58: groove
- 60: adsorbent
- AP: air flow path
- P1: tube-side flat portion
- P2: adsorption-side flat portion

## Claims

1. An adsorption unit comprising:
a heat exchanger (41) that includes a plurality of heat transfer tubes (44) through which a heat medium flows and is disposed in an air flow path (AP) through which air flows; and
an adsorption member (50) that includes an adsorbent (60) that adsorbs carbon dioxide in the air, wherein
the adsorption member (50) includes a plurality of adsorption portions (51) each of which is disposed between adjacent ones of the heat transfer tubes (44), and
each of the plurality of adsorption portions (51) has a plurality of holes (56) through which air passes and carries the adsorbent (60).

2. The adsorption unit according to claim 1, wherein
a gap is provided between each of the heat transfer tubes (44) and a corresponding one of the adsorption portions (51).

3. The adsorption unit according to claim 1 or 2, wherein
the heat transfer tubes are flat tubes (44).

4. The adsorption unit according to claim 3, wherein
each of the flat tubes (44) includes a tube-side flat portion (P1) that faces a corresponding one of the adsorption portions (51), and
each of the adsorption portions (51) includes an adsorption-side flat portion (P2) that faces the tube-side flat portion (P1).

5. The adsorption unit according to any one of claims 1 to 4, wherein
each of the adsorption portions (51) has, as the holes, a plurality of through-holes (56) that extend in a predetermined direction.

6. The adsorption unit according to claim 5, wherein
the plurality of through-holes (56) extend in a direction crossing a first direction that is a direction in which the plurality of heat transfer tubes (44) are arranged.

7. The adsorption unit according to claim 6, wherein
the plurality of through-holes (56) extend in a direction crossing the first direction and a second direction that is a tube axial direction of the heat transfer tubes (44).

8. The adsorption unit according to any one of claims 1 to 7, wherein
the heat exchanger (41) includes header collection tubes (42, 43) to which end portions of the plurality of heat transfer tubes (44) are connected.

9. The adsorption unit according to any one of claims 1 to 8, wherein
the adsorption member (50) includes a coupling portion (55) that couples the plurality of adsorption portions (51).

10. The adsorption unit according to claim 9, wherein
the adsorption member (50) includes a plurality of grooves (58) each of which is provided between adjacent ones of the adsorption portions (51), and
each of the plurality of heat transfer tubes (44) is fitted into a corresponding one of the plurality of grooves (58).

11. The adsorption unit according to claim 10, wherein
the plurality of grooves (58) are provided in a lower portion of the adsorption member (50), and
the heat exchanger (41) supports the adsorption member (50) from below.

12. The adsorption unit according to any one of claims 1 to 11, wherein
the adsorption portions (51) include a base member (B) that carries the adsorbent (60), and
the base member (B) is made of a material having a thermal conductivity of 1 [W/(m·K)] or higher.

13. The adsorption unit according to any one of claims 1 to 11, wherein
the heat transfer tubes are flat tubes (44),
a direction in which the flat tubes (44) are arranged is defined as a first direction, a direction in which the flat tubes (44) extend is defined as a second direction, and a direction orthogonal to the first direction and the second direction is defined as a third direction,
the adsorption member (50) includes a coupling portion (55) that couples the plurality of adsorption portions (51), and
each of the plurality of adsorption portions (51) extends in the third direction from one end side where the coupling portion (55) is located toward the other end side.

14. The adsorption unit according to claim 13, wherein
each of the adsorption portions (51) includes enlarging surfaces (81, 82) that increase an interval between adjacent ones of the adsorption portions (51) in the first direction from one end side to the other end side in the third direction.

15. An adsorption device comprising:
the adsorption unit (40) according to any one of claims 1 to 14; and
a casing (31) that forms the air flow path (AP).

16. The adsorption device according to claim 15, wherein
the casing (31) has an inflow port (34) through which air flows into the air flow path (AP) and an outflow port (35) through which the air in the air flow path (AP) flows out, and
each of the plurality of through-holes (56) includes an inflow hole (56a) that is located on a side where the inflow port (34) is located and through which air flows in and an outflow hole (56b) that is located on a side where the outflow port (35) is located and through which air flows out.

17. A carbon dioxide recovery system comprising the adsorption unit (40) according to any one of claims 1 to 16.
